# EUROPEAN PATENT APPLICATION

(11) **EP 1 324 246 A1**
(43) Date of publication of application: **02.07.2003**
(21) Application number: 02026171.5
(22) Date of filing: 25.11.2002
(51) Int. Cl.: G06F 17/60

(54) **Autonomous rental store**

(30) Priority: 27.12.2001 US 26965
(71) Applicant: Caterpillar Inc., Peoria Illinois 61629-6490 (US)
(72) Inventor: Janda, Steven R., c/o CATERPILLAR INC., Peoria, Illinois 61629-6490 (US)
(74) Representative: Wagner, Karl H., Dipl.-Ing.

(57) **Abstract**

A method is provided for managing rental equipment including sensing the identity of a customer and providing the customer access to a first secure area 102 connected to a plurality of second secured areas 104, one of which includes a piece of equipment 116 to be rented by the customer. The customer is provided access to the second secure area 104 that includes the piece of equipment 116 to be rented by the customer. The system can be used for rental equipment pick up or return and pick up of goods for purchase.

## Description

### Technical Field

The present invention relates generally to rental equipment businesses and, more particularly, to a system and method for improving the availability of rental equipment.

### Background

Ensuring equipment availability is an important aspect of the rental equipment business today. Specifically, customers want the equipment they are renting to be ready and available for pick up at a time that is convenient for them. Similarly, customers want to return rental equipment at their convenience.

Meeting the equipment availability needs of rental customers is a challenging task for rental businesses. For example, customers may wish to pick up and return equipment when traffic delays are at a minimum, i.e., during non-rush hours or on weekends. Customers that use rental equipment during daylight hours may wish to pick up and return equipment before sunrise or after sunset to maximize working hours. Furthermore, customers that work a traditional nine-to-five day may only be able to pick up and return rental equipment during these working hours.

To save time and effort, customers renting multiple pieces of equipment may want to pick up and return all of the equipment at the same time. This equipment may include large equipment, such as bulldozers or other machinery, as well as small equipment, such as jackhammers or air compressors. Further, customers may rent accessories, such as cords, hoses, or generators, with various pieces of equipments. Customers may also purchase goods, such as fuel, oil, feed, etc.

Currently available rental equipment business systems do not adequately meet the equipment availability needs of all customers. Many systems, for example, require a customer to pick up and return rental equipment during certain hours when a rental store is open for business. Conventional systems require pick up and delivery when the rental store is open so that a rental store worker can ensure that the customer is authorized to pick up or return the equipment and that the customer picks up or returns the correct equipment.

Some rental equipment business systems allow customers to return equipment, such as rental cars, without interacting with rental store personnel. One such system is disclosed in U.S. Patent No. 6,006,148 for an Automated Vehicle Return System. This system tracks data, such as mileage and fuel level, about a rental car during the rental period. When the customer returns the rental car, the system automatically generates a bill for the rented vehicle. However, this system does not provide for secure and convenient pick up of rental equipment. Furthermore, the rental car return system cannot accommodate customers picking up or returning multiple pieces of equipment at once. Also, this system does not account for partial pick ups and/or returns of rental equipment. Additionally, the rental car return system does not provide for equipment rental and/or purchase of goods.

The present invention is directed to overcoming one or more of the problems or disadvantages associated with the prior art.

### Summary of the Invention

One aspect of the invention involves a method for managing rental equipment that includes sensing the identity of a customer and selectively providing the customer access to a first secure area based upon the sensed identity, the first secure area being connected to a plurality of second secured areas, one of which includes a piece of equipment to be rented by the customer. The customer is selectively provided access to the second secure area based upon the sensed identity, the second secure area including the piece of equipment to be rented by the customer.

Another aspect of the invention involves a method for managing rental equipment that includes sensing the identity of a customer and selectively providing the customer access to a secure area based on the sensed identity, the secure area including a piece of equipment to be rented by the customer. As the piece of equipment is moved within a predetermined distance from an exit of the secure area, an identifier on the piece of equipment is sensed. When the identity of the customer corresponds to the identifier on the piece of equipment, the customer is allowed to remove the piece of equipment from the secure area.

Yet another aspect of the invention involves a method for managing rental equipment that includes sensing the identity of a customer and selectively providing the customer access to one of a plurality of secure areas based on the sensed identity, the one secure area containing a piece of equipment to be rented by the customer. The customer is allowed to remove the piece of equipment from the one secure area.

Still another aspect of the invention involves a system for managing rental equipment, including a first secure area and a plurality of second secure areas accessible from the first secure area, one of which is assigned to a customer. An access controller selectively allows the customer to access the second secure area assigned to the customer.

In a further aspect of the invention, a system is provided for managing rental equipment that includes a secure area including a piece of equipment to be rented by a customer and an access controller that selectively allows the customer to access the secure area when an identity of the customer is verified. The system includes a sensor that senses an identifier on the piece of equipment and directs the access controller to allow the customer to remove the piece of equipment from the secure area when the identifier on the piece of equipment corresponds to the identity of the customer.

In yet another aspect of the present invention, a method is provided for managing goods including sensing the identity of a customer and selectively providing the customer access to a first secure area based upon the sensed identity, the first secure area being connected to a plurality of second secure areas, one of which includes goods to be purchased by the customer. The customer is selectively provided access to the second secure area based upon the sensed identity, the second secure area including the goods to be purchased by the customer.

Still further, consistent with the present invention a system for providing goods to a customer is provided, including a first secure area, a plurality of second secure areas accessible from the first secure area, one of which is assigned to a customer, and an access controller that selectively allows the customer to access the second secure area assigned to the customer.

An additional embodiment consistent with the present invention provides a method of managing rental equipment including sensing the identity of a customer, selectively providing the customer access to a secure area based upon the sensed identity, the secure area associated with the customer, and sensing an identifier on a piece of equipment as the equipment is moved

Another method consistent with the present invention manages goods by sensing the identity of a customer, selectively providing the customer access to a secure area based upon the sensed identity, the secure area including goods to be purchased by the customer, sensing an identifier on the goods as the goods are moved within a predetermined distance from an exit of the secure area, and allowing the customer to remove the goods from the secure area.

Another system consistent with the present invention includes a secure area including goods to be purchased by a customer, an access controller that selectively allows the customer to access the secure area when an identity of the customer is verified, and a sensor that senses an identifier on the goods and directs the access controller to allow the customer to remove the goods from the secure area when the identifier on the goods corresponds to the identity of the customer.

It is to be understood that both the foregoing general description and the following detailed description are exemplary and explanatory only and are not restrictive of the invention as claimed.

### Brief Description of the Drawings

The accompanying drawings, which are incorporated in and constitute a part of this specification, illustrate an exemplary embodiment of the invention and together with the description, serve to explain the principles of the invention. In the drawings:
Fig. 1 is a block diagram of a rental equipment business system, consistent with an exemplary embodiment of the present invention;
Fig. 2 is a block diagram of a rental equipment business system, consistent with another exemplary embodiment of the present invention;
Fig. 3 is a flowchart of an exemplary rental equipment pick up transaction using rental equipment business system 100, consistent with the present invention; and
Fig. 4 is a flowchart of an exemplary rental equipment return transaction using rental equipment business system 100, consistent with the present invention.

### Detailed Description

Reference will now be made in detail to embodiments of the invention, examples of which are illustrated in the accompanying drawings. Wherever possible, the same reference numbers will be used throughout the drawings to refer to the same or like parts.

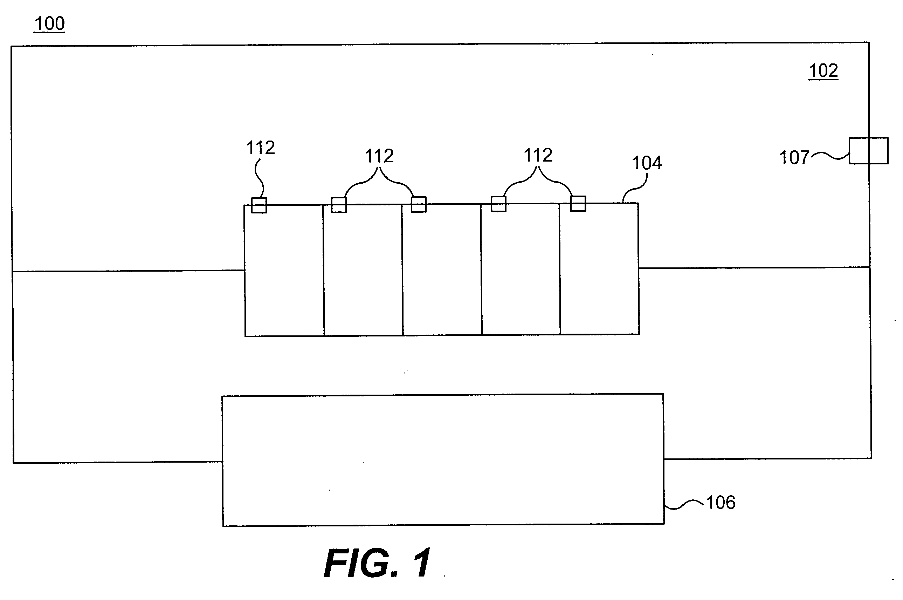

Fig. 1 illustrates a rental equipment business system 100, consistent with an exemplary embodiment of the present invention. Rental equipment business system 100 may be, for example, an autonomous rental store. Rental equipment business system 100 may include a first secured area 102, one or more second secured areas 104, and a rental office 106. First secured area 102 may include an access controller 107. Second secured area 104 may include an access controller 112.

Rental equipment business system 100 may enable a customer to rent and/or purchase equipment and other goods. Equipment may include, for example, large equipment, such as bulldozers, automobiles, or other machinery, small equipment, such as jackhammers or air compressors, and accessories such as hoses or tools. Goods may include, for example, fuel, oil, feed, fluids, accessories, and equipment. In one embodiment, the term equipment may include equipment and/or goods.

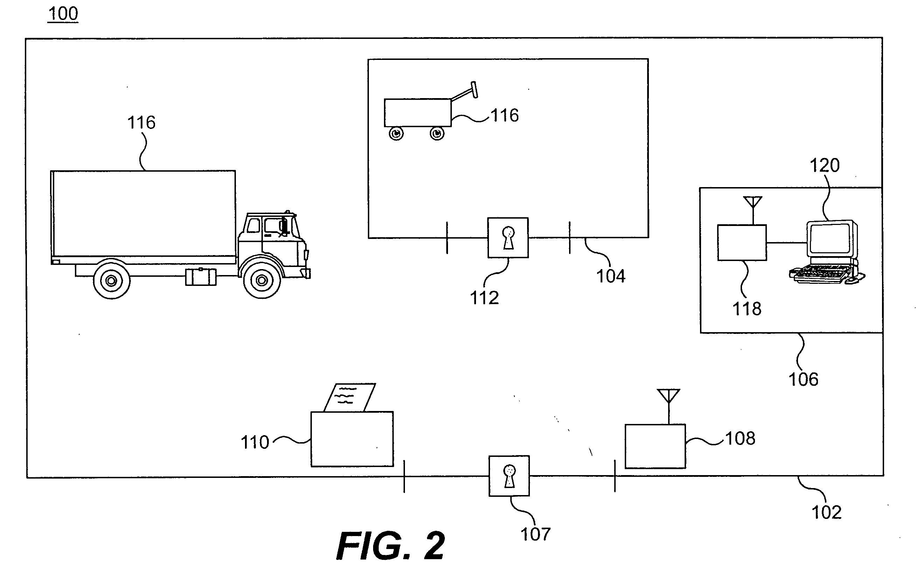

Fig. 2 illustrates a rental equipment business system 100, consistent with another exemplary embodiment of the present invention. Rental equipment business system 100 may be, for example, an autonomous rental store. Rental equipment business system 100 may include a first secured area 102, one or more second secured areas 104, and a rental office 106.

First secured area 102 may include an access controller 107. Second secured area 104 may include an access controller 112 and equipment 116 and/or goods for purchase. Rental office 106 may include a receiver 118 and a computer 120. In one embodiment, computer 120 may be receiver 118.

Access controllers 107 and 112 may be, for example, electronic locks that control the opening and closing of gates surrounding first secured area 102 and second secured area 104, respectively. Alternatively, access controllers 107 and 112 may be any other locking mechanisms with electronic activation to control access to equipment 116 such as, for example, a wheel lock, a chain and padlock, or an electrically activated pin through a vehicle's hitch. Access controllers 107 and 112 may be released remotely or released locally to permit access to equipment 116 or goods for purchase. In one embodiment, the access controllers may be released automatically or in an automated manner. Access controllers 107 and 112 may include an input mechanism that enables a user to input identification information to gain access to first secured area 102 and second secured area 104, respectively. The input mechanism may be any type of mechanism for controlling access to a secured area, such as, for example, a card reader, keypad, or transponder.

In one embodiment, an access controller may receive input from a customer and communicate the input (or a portion thereof) to a computer. The computer may determine and/or verify that the customer should have access to the area and communicate the approval/rejection back to the access controller. In an alternative embodiment, access controller 107 and/or 112 may include enough information locally to verify authorized access without communication with a remote system. In one embodiment, first secured area 102 may include an access controller 107, a sensor 108, a printer 110, and equipment 116 and/or goods for purchase.

Sensor 108 may include any type of sensor for gathering information, such as, for example, a radio frequency identification (RFID) tag, bar code reader, or a GPS-based sensor. The information gathered may include the identity of equipment 116, information about the status of equipment 116, and/or information about goods for purchase. Sensor 108 may send the information gathered to receiver 118 using a wireless local area network, a wide area network, or any other communications network. Receiver 118 may communicate with computer 120, for example, to share data collected by sensor 108. Although Figure 1 shows one sensor 108, rental equipment business system 100 may include any number of sensors.

Computer 120 may include an order monitoring system to generate and/or track a rental agreement for a customer renting equipment through rental equipment business system 100. The rental agreement may include, for example, customer identification information and a list of equipment the customer wishes to rent. In one embodiment, an approved rental/purchase group may be established. If the customer is a member of an approved rental/purchase group, information associated with the rental agreement may also include information about the approved rental group. Computer 120 may enable a customer to pick up and return equipment 116 at any time by interacting, via manual or electronic interaction, with access controllers 107 and/or 112. Computer 120 may communicate with access controllers 107 and 112 using a wireless local area network, a wide area network, the Internet, or any other communications network using wireless or hardwired connections.

Equipment 116 may include large equipment, such as bulldozers or other machinery, and/or small equipment, such as jackhammers or air compressors. Equipment 116 may also include accessories to be used with the large or small equipment. Equipment 116 may be held in first secured area 102 or in second secured area 104. In addition, goods to be purchased by the customer, such as oil, fuel, or any other items, may be held in first secured area 102 or in second secured area 104. Equipment 116 and/or goods for purchase may include RFID tags, bar codes, or other information tags. For example, equipment 116 may include an RFID tag that, when scanned by sensor 108, provides information relating to the identification of equipment 116 and/or information relating to the status of equipment 116. Information relating to the identification of the equipment may include, for example, the type of equipment, a serial number associated with the equipment, and/or information about the configuration of the equipment. Information relating to the status of the equipment may include the number of miles or hours that the equipment has been in operation and/or the equipment's maintenance information. This information may be transmitted directly to receiver 118, or may be sensed using sensor 108 and subsequently sent to receiver 118.

In one embodiment, a method of managing goods being rented and/or purchased includes the steps of sensing the identity of a customer, selectively providing the customer access to a first secure area based upon the sensed identity, the first secure area being connected to a plurality of second secure areas, one of which includes a piece of equipment to be rented by the customer, and selectively providing the customer access to the second secure area based upon the sensed identity, the second secure area including the piece of equipment to be rented by the customer.

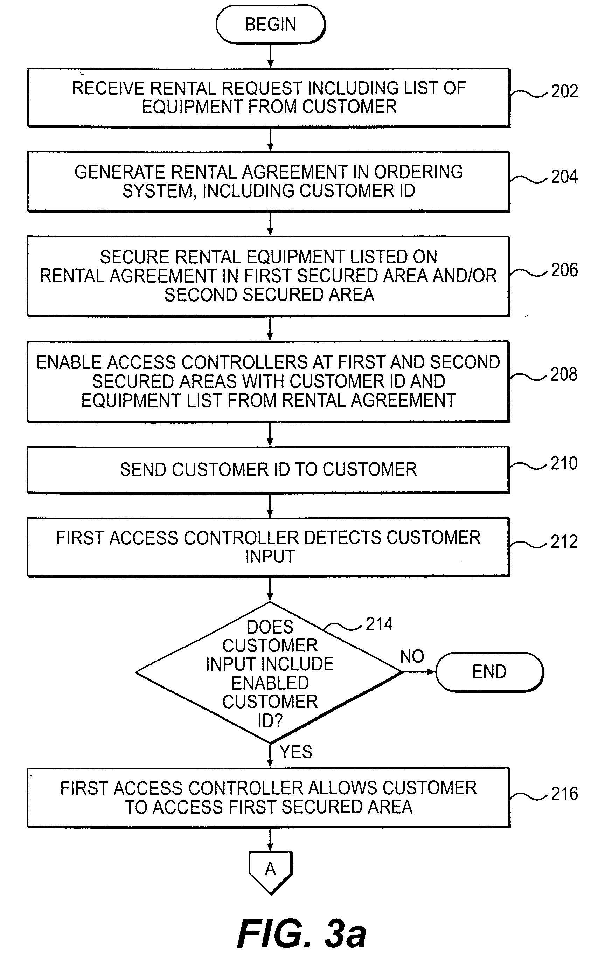

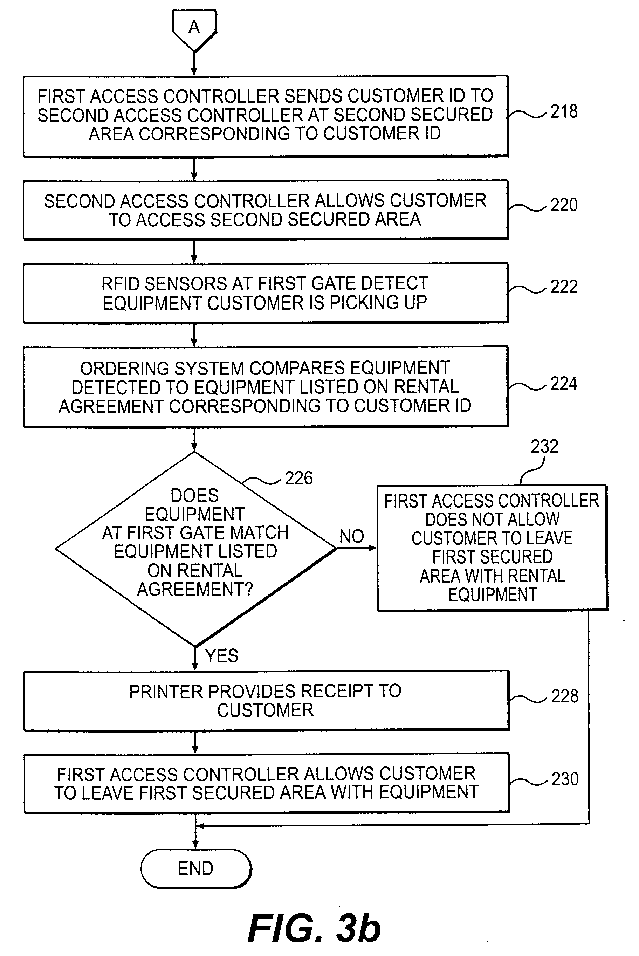

Figure 3 is a flowchart of an exemplary rental equipment pick up transaction using rental equipment business system 100. A customer may enter rental office 106, telephone a clerk at rental office 106, or electronically contact rental office 106, e.g., via a website or e-mail, to request one or more pieces of equipment 116 for rental and/or goods for purchase. When the request is received (step 202), the clerk may enter details of the request into an ordering system on computer 120, which may generate a rental agreement including customer identification information and a list of the equipment 116 to be rented and/or goods for purchase (step 204). The ordering system may also designate a second secured area 104 corresponding to the rental agreement and direct the clerk or other worker to secure equipment 116 and/or goods for purchase in second secured area 104 (step 206). For example, the clerk may secure small equipment or equipment without identification tags in second secured area 104 while securing large equipment in first secured area 102. Alternatively, all equipment 116 may be secured in first secured area 102 or all equipment 116 may be secured in second secured area 104.

The clerk or other worker or computer 120 may enable access controllers 107 and 112 (step 208) and send the customer identification information to the customer (step 210) so that the customer may access first secured area 102 and second secured area 104 to pick up equipment 116 and/or goods for purchase at the customer's convenience. Alternatively, the customer may already have a card or other identification information that can be used to access first secured area 102 and/or second secured area 104. If no equipment or goods corresponding to the customer is secured in second secured area 104, then the clerk, other worker, or computer 120 may enable access controller 107 and not access controller 112. To enable access controllers 107 and 112, the customer's identification information and a list of equipment 116 may be stored at access controller 107 and/or access controller 112.

Alternatively, computer 120 may monitor a planning board or information associated with rental agreements to determine what is to be secured and where it is to be secured. In one embodiment, computer 120 may process a rental agreement, determine the equipment and/or goods to be secured, determine where to secure the equipment and/or goods, and post a command on a planning board to have the activity take place. Computer 120 may provide access to a customer via notification of security identifiers or may notify an employee to provide security identifiers to the customer. Computer 120 may track when equipment and/or goods are secured in first secured area 102 and/or second secured area 104, for example, by employees performing a manual entry/acknowledgement once equipment is secured, or by having sensors detect when equipment is placed in first secured area 102 and/or second secured area 104. The sensors may then notify computer 120 and computer 120 may enable access controller 107 and/or access controller 112 to provide access to the customer.

When the customer arrives to pick up equipment 116, access controller 107 may receive input from the customer (step 212). This could occur, for example, when the customer enters the customer identification information into a keypad at access controller 107 or swipes a card at a card reader associated with access controller 107. Access controller 107 may determine whether the input from the customer includes a customer identification that has been enabled (step 214). Access controller 107 may search its own memory to determine whether the input includes an enabled customer identification. Alternatively, access controller 107 may send the input to computer 120, which may search for information associated with a rental agreement corresponding to the input and determine whether the flag or other indicator has been set to indicate that the customer is allowed to access equipment 116 and/or goods for purchase.

If the customer input includes an enabled customer identification, then access controller 107 may allow the customer to access first secured area 102, for example, by unlocking and opening the gate (step 216). If equipment corresponding to the customer is secured in second secured area 104, then access controller 107 may send the customer identification to access controller 112 (step 218) so that access controller 112 may allow the customer to access second secured area 104 (step 220). Access controller 107 may determine which second secured area to communicate with based on the information associated with the rental agreement stored in its memory. Alternatively, computer 120 may send the customer identification to access controller 112. In another alternative, the customer may re-enter the input into access controller 112 and access controller 112 may determine whether the input includes an enabled customer identification.

Once the customer accesses first secured area 102 and/or second secured area 104, the customer may pick up equipment 116. In an embodiment of the present invention, a gate to first secured area 102 and/or second secured area 104 may close after a predetermined amount of time or in response to the customer's movements inside the area. Sensor 108 may detect that the customer is attempting to remove equipment 116 from first secured area 102, for example, via an RFID tag on equipment 116 (step 222). Sensor 108 may communicate this information to computer 120 via receiver 118. Computer 120 may compare the equipment detected by sensor 108 to the equipment listed on the information associated with rental agreement corresponding to the customer identification (step 224). If the detected equipment matches the equipment listed on the rental agreement (step 226), printer 110 may provide a printed receipt to the customer (step 228) and access controller 107 may allow the customer to leave first secured area 102 with equipment 116 (step 230). The printed receipt may include, for example, customer identity, date, time, and a list of the equipment picked up.

If the equipment detected by sensor 108 does not match the equipment listed in the rental agreement, access controller 107 may not allow the customer to leave first secured area 102 with the equipment (step 232). This enables methods and systems consistent with the present invention to restrict access even to equipment that does not require a key, such as a hose or a hand tool. For example, access controller 107 may sound an alarm, notify a rental clerk, or open the gate only enough for a person, but no equipment, to exit. Alternatively, access controller 107 may allow the customer to leave first secured area 102 with the incorrect equipment and may store, either locally or in computer 120, a list of the equipment removed by the customer. Computer 120 may also store information about the identity and/or status of equipment 116. This information may be used by a rental clerk to determine whether any damage or overuse occurs during the rental period.

In an embodiment of the present invention, rental equipment business system 100 may include one or more cameras to record activity in first secured area 102 and/or second secured area 104. The cameras may automatically begin recording when customer input is received at access controller 107 and record activity for a predetermined amount of time. Alternatively, cameras may record constantly and when the customer arrives, the time/date or a tape locator may be stored to create a video history of the customer's access. The recording could be used, for example, for security purposes or to note the condition of equipment picked up and returned.

In one embodiment of the present invention, a customer may identify equipment to be rented and/or purchased once the customer arrives to pick up the equipment. A customer may be approved to rent/purchase equipment without pre-selecting what equipment will be rented/purchased. For example, the customer may have past dealings with a rental facility or the customer may be a member of an approved group. An approved customer may have identification information that allows the customer to access first secured area 102 and/or second secured area 104. The identification information may include, for example, a personal identification number, or an access card, or a combination thereof.

Using the identification information, the customer may enter a secure area (e.g., first secured area 102 or second secured area 104) to pick up equipment for rent and/or purchase. In one embodiment, the customer does not need to notify the rental office prior to his arrival. Once in the secure area, the customer may identify equipment he wishes to rent and/or purchase. When the customer accesses the equipment and leaves the facility, the equipment may be sensed and recorded, for example, by sensor 108. Alternatively, multiple sensors, such as RFID readers, may be located throughout the secure area to monitor movement of equipment.

When the equipment is sensed and/or recorded, information associated with a rental/purchase agreement may be collected. For example, status information about the equipment, e.g., service hour meter information, health information, etc., may be collected. Using the collected information, the rental/purchase agreement may be created, for example, by computer 120, and provided to the customer, for example, by printer 110. Alternatively, a rental/purchase agreement may be generated later and sent to the customer, for example, by mail or electronically.

In one embodiment, computer 120 may generate an invoice or rental/purchase agreement for the equipment taken from the secure area based on the identification information entered by the customer on arrival. Alternatively, the customer may re-enter the identification information at access controller 107 and/or 112 in order to leave the secure area. In an alternative embodiment, an invoice may not be provided to the customer and the customer may be billed, for example, at the end of the month or when the equipment is returned. For example, computer 120 may run a monthly report to bill any customers who had rental/purchase activity over the month. As an example, a customer may have picked up a machine on June 5th and returned it on June 9th, and picked up another machine on June 14th and returned in on July 20th. Computer 120 may produce an invoice for the month of June containing charges for both rentals, or the June invoice may contain the first rental (i.e., the machine returned on June 14th) and a July invoice may contain the second rental (i.e., the machine returned on July 20th). An invoice may include, for example, a monthly fee, a charge for any equipment and/or goods purchased, an estimated charge for rental of equipment, and/or a charge based on actual usage of equipment (e.g., from information received from the equipment).

In an embodiment of the present invention, equipment to be rented/purchased may be available on a first come, first served basis or equipment may be reserved. For example, rental equipment business system 100 may include a web site or catalog listing all pieces of equipment available for rent/purchase. A customer may access the web site or catalog to determine if the needed equipment is available and, if so, the customer may go to the secure area to pick up the equipment. Alternatively, an automated reservation system may be used to enable the customer to reserve a piece of equipment. Once a piece of equipment has been reserved, the reservation system may update the web site or catalog to indicate that the piece of equipment is unavailable or reserved, or the reserved piece of equipment may not be listed at all.

In one embodiment, a customer may be charged for the rental from the time of the reservation, regardless of when or if they pick up the equipment. If the equipment is reserved but not picked up for a predetermined amount of time, the reservation may automatically be canceled by the reservation system to make the piece of equipment available to others. Once a piece of equipment is reserved, a code may be transmitted to the piece of equipment or to an access controller to prohibit another customer from picking up the reserved piece of equipment. Alternatively, a rental board may be used in the secure area to indicate which machines are available for rent.

As described in Figure 3 and above, an exemplary embodiment of rental equipment business system 100 enables a customer to pick up rental equipment with no human intervention, making it possible to allow rental equipment pick ups twenty-four hours a day, seven days a week.

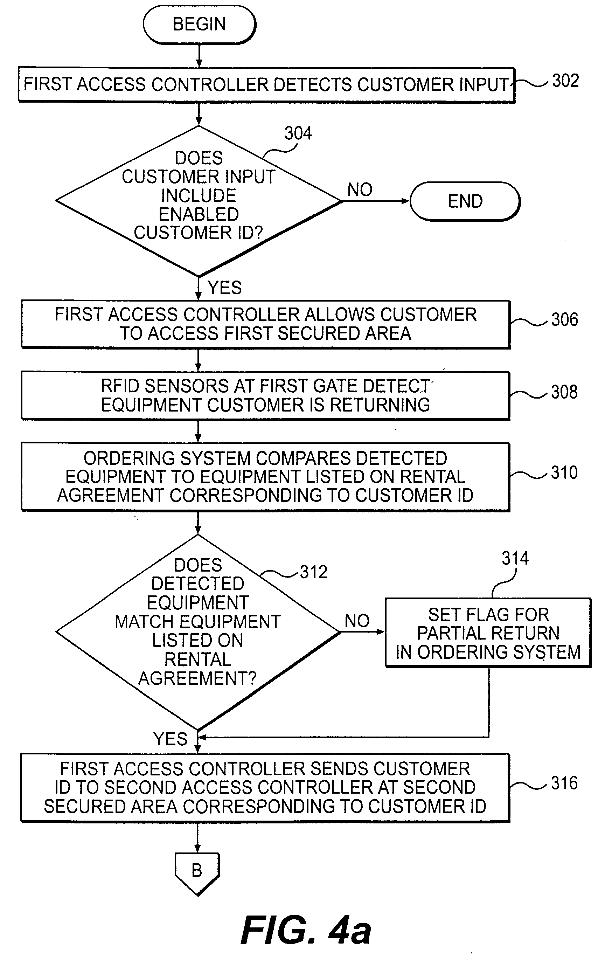

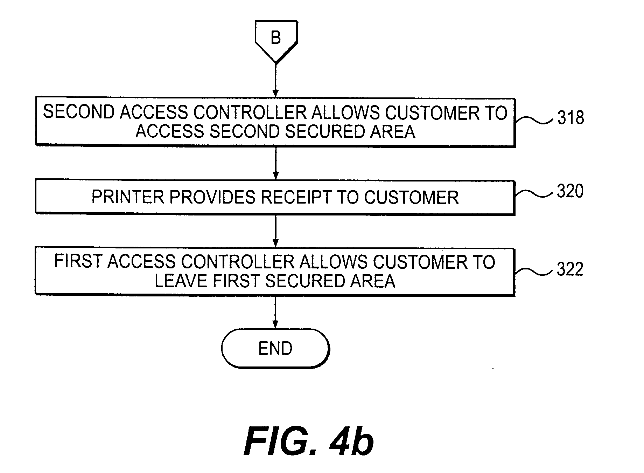

Figure 4 is a flowchart of an exemplary rental equipment return transaction using rental equipment business system 100. To allow a customer to return equipment 116, a rental clerk may enable access controller 107 and/or access controller 112 based on an expected return date and time or the customer may be enabled for returns anytime after an equipment pick up is noted. When a customer arrives to return equipment 116, access controller 107 may receive input from the customer (step 302). This could occur, for example, when the customer enters customer identification information into a keypad or swipes a card at a card reader at access controller 107. Access controller 107 may determine whether the input from the customer includes a customer identification that has been enabled (step 304). Access controller 107 may search its own memory to determine whether the input includes an enabled customer identification. Alternatively, access controller 107 may send the input to computer 120, which may search for information associated with a rental agreement corresponding to the input and determine whether the flag or other indicator has been set to indicate that the customer is expected to return equipment 116.

If the customer input includes an enabled customer identification, then access controller 107 may allow the customer to access first secured area 102, for example, by unlocking and opening the gate (step 306). Sensor 108 detects the equipment that the customer is moving into first secured area 102, for example, via an RFID tag on equipment 116 (step 308). Sensor 108 may communicate this information to computer 120 via receiver 118. Computer 120 may compare the equipment detected by sensor 108 to the equipment listed on the rental agreement corresponding to the customer identification (step 310). If the detected equipment does not match the equipment listed on the rental agreement (step 312), then a flag may be set in the ordering system in computer 120 to indicate an incorrect return (step 314). If the equipment detected includes some, but not all, of the equipment listed on the rental agreement, then a partial return may be flagged. If the equipment detected does not include any of the equipment listed on the rental agreement, then an error flag may be set.

Access controller 107 may send the customer identification to access controller 112 (step 316) so that access controller 112 may allow the customer access to second secured area 104 (step 318). Access controller 106 may determine which second secured area to communicate with based on information associated with the rental agreement or other indicator stored in its memory. Alternatively, computer 120 may send the customer identification to access controller 112 or the customer may re-enter the input into access controller 112 and access controller 112 may determine whether the input includes an enabled customer identification. In another alternative embodiment, the customer may return equipment 116 to first secured area 102 and no access to second secured area 104 will be given. In an embodiment of the present invention, a gate to first secured area 102 and/or second secured area 104 may close after a predetermined amount of time or in response to the customer's movements inside the area. It is contemplated that the secured area(s) used for equipment return may or may not be the same secured area(s) used for equipment pick up.

Printer 110 may provide a printed receipt to the customer (step 320) and access controller 107 may allow the customer to leave first secured area 102 (step 330). The printed receipt may include, for example, customer identity, time, date, and a list of equipment 116 returned or a list of equipment not returned. Computer 120 may store information received from sensors 108 and 114, including information about the identity and status of equipment 116. This information may be used by a rental clerk to follow up with the customer to collect for any damage to the equipment or to arrange for the return of any outstanding equipment.

In one embodiment of the present invention, a customer may be approved to return equipment without prior notification of the rental facility. For example, the customer may have past dealings with a rental facility or the customer may be a member of an approved group. An approved customer may have identification information that allows the customer to access a secure area for returns, e.g., first secured area 102 or second secured area 104. The identification information may include, for example, a personal identification number, or an access card, or a combination thereof.

Using the identification information, the customer may enter a secure area (e.g., first secured area 102 or second secured area 104) to return rental equipment. When the customer returns the equipment, the equipment may be sensed and recorded, for example, by sensor 108. Alternatively, multiple sensors, such as RFID readers, may be located throughout the secure area to monitor movement of equipment. When the equipment is sensed, status information about the equipment, e.g., service hour meter information, health information, etc., may be collected. The collected information may be stored with the customer's identification information by, for example, computer 120. A rental agreement, receipt, invoice or other documents may be generated and provided to the customer at the secure area or may be sent to the customer electronically or through the mail.

As described in Figure 4 and above, an exemplary embodiment of rental equipment business system 100 enables a customer to return rental equipment with no human intervention, making it possible to allow rental equipment returns twenty-four hours a day, seven days a week.

### Industrial Applicability

Systems and methods are thus provided for improving the availability of equipment in a rental business. Specifically, systems consistent with the present invention may enable a customer to pick up rental or purchased equipment and return rental equipment twenty four hours per day, seven days per week. Equipment availability does not depend on certain hours when a rental store is open for business. As discussed above, equipment includes equipment and/or goods.

Furthermore, systems and methods consistent with the present invention may enable a customer to pick up and return multiple pieces of rental equipment, including large and small equipment and accessories, at one time. The equipment may be available to the customer in more than one area based on, for example, the size of the equipment or the security level for the equipment.

In addition to improving rental equipment availability, systems and methods consistent with the present invention provide for autonomous pick up and return of rental equipment, including tracking partial equipment pick ups and returns. This leads to a more cost-effective system.

The present invention provides systems and methods that may be applied to any rental business, including, for example, machine equipment rental (e.g., construction, paving, farm, forestry, loading, etc.), car rental, furniture rental, office machinery rental, and household appliance and tool rental. Systems and methods consistent with the present invention enable secure pick up of goods for purchase.

It will be readily apparent to those skilled in this art that various changes and modifications of an obvious nature may be made, and all such changes and modifications are considered to fall within the scope of the appended claims. Other embodiments of the invention will be apparent to those skilled in the art from consideration of the specification and practice of the invention disclosed herein. It is intended that the specification and examples be considered as exemplary only, with a true scope and spirit of the invention being indicated by the following claims and their equivalents.

## Claims

1. A method of managing rental equipment, comprising the steps of:
sensing the identity of a customer;
selectively providing the customer access to a secure area 102 based upon the sensed identity, the secure area including a piece of equipment 116 to be rented by the customer;
sensing an identifier on the piece of equipment 116 as the equipment is moved within a predetermined distance from an exit of the secure area 102; and
allowing the customer to remove the piece of equipment 116 from the secure area 102.

2. The method of claim 1, further including the step of:
allowing the customer to remove the piece of equipment 116 from the secure area 102 when the identity of the customer corresponds to the identifier on the piece of equipment 116.

3. The method of claim 1, further including the step of:
automatically recording what the customer removes from the secure area 102.

4. The method of claim 1, further including the step of:
permitting the customer to return the piece of equipment 116.

5. The method of claim 1, further including the step of:
allowing the customer to remove goods for purchase from the secure area 102.

6. A system for managing rental equipment, comprising:
a first secure area 102;
a plurality of second secure areas 104 accessible from the first secure area 102, one of which is assigned to a customer; and
an access controller 112 that selectively allows the customer to access the second secure area 102 assigned to the customer.

7. The system of claim 6, further including
a sensor 108 that records a piece of equipment 116 removed from the second secure area 104.

8. The system of claim 6, further including
a sensor 108 that records a piece of equipment 116 returned to the second secure area 104.

9. The system of claim 6, further including
a sensor 108 that records goods removed from the second secure area 104.

10. The system of claim 6, wherein the customer is a member of an approved group of renters and wherein the second secure area 104 includes equipment 116 available to the approved group of renters.
